Europäisches Patentamt

European Patent Office

Office européen des brevets

(11) Veröffentlichungsnummer: **0 335 366 B1**

## EUROPÄISCHE PATENTSCHRIFT

(45) Veröffentlichungstag der Patentschrift: **25.11.92**

(21) Anmeldenummer: **89105536.0**

(22) Anmeldetag: **29.03.89**

(51) Int. Cl.⁵: **B23H 7/06**

(54) **Verfahren zur numerischen Bahnsteuerung für Elektroerodiermaschinen.**

(30) Priorität: **29.03.88 DE 3810662**

(43) Veröffentlichungstag der Anmeldung:
**04.10.89 Patentblatt 89/40**

(45) Bekanntmachung des Hinweises auf die Patenterteilung:
**25.11.92 Patentblatt 92/48**

(84) Benannte Vertragsstaaten:
**CH DE FR GB IT LI LU SE**

(56) Entgegenhaltungen:
**EP-A- 0 124 611**

**PATENT ABSTRACTS OF JAPAN vol. 9, no. 249 (M-419)(1972) 05 October 1985,& JP-A-60 99524 (INOUE JAPAX KENKYUSHO) 03 June 1985,**

(73) Patentinhaber: **AG für industrielle Elektronik AGIE Losone bei Locarno**

**CH-6616 Losone/Locarno(CH)**

(72) Erfinder: **Borsari, Claudio**

**CH-6652 Tegna(CH)**

(74) Vertreter: **EGLI-EUROPEAN PATENT ATTORNEYS**
**Widenmayerstrasse 5**
**W-8000 München 22(DE)**

## Beschreibung

Die Erfindung betrifft ein Verfahren zur numerischen Bahnsteuerung für Elektroerodiermaschinen gemäß dem Oberbegriff des Patentanspruches 1.

Die Bearbeitung von Werkstücken zum Erzielen von relativ schwierigen geometrischen Figuren, wie beispielsweise einer Hyperboloidform soll mit äußerst möglicher Präzision der erhaltenen Fläche gegenüber der erwünschten Fläche erfolgen (Ist-Fläche, Soll-Fläche). Die Oberflächengenauigkeit des bearbeiteten Werkstückes ist dabei durch den Verlauf einer Ist-Bahnkurve auf der Oberfläche im Verhältnis zu einer Soll-Bahnkurve definiert.

Aus der Europäischen Patentschrift 0 062 074 ist es bekannt, einen Erodierdraht zu verwenden, dessen beide Führungen unabhängig voneinander bewegt werden. Damit man zur Definition der Bahnkurven für die Führungen und damit indirekt für die Soll-Bahnkurven auf der Oberfläche des Werkstückes nicht zu viele Bahnpunkte eingeben muß, ist es bekannt, zwischen vorgegebenen Bahnpunkten mit Hilfe einer vorgegebenen Funktion die vollständige, gewünschte Bahnkurve durch Interpolation zu bestimmen. Dabei erfolgt nach der bekannten Lehre die Interpolation der Bahnkurven für die beiden Führungen der Drahtelektrode unabhängig voneinander, die Art der Interpolation bzw. genauer gesagt, die mathematische Funktion, nach der die Interpolation durchgeführt wird, ist jedoch in beiden Fällen gleich.

Es stellte sich jedoch heraus, daß die Maßgenauigkeit und insbesondere die Oberflächenbeschaffenheit der mit der bekannten Maschine bearbeiteten Werkstücke nicht zufriedenstellend war.

Der Erfindung liegt daher die Aufgabe zugrunde, Schneidfehler am zu bearbeitenden Werkstück zu verringern und dabei weniger geometrische Information in die Erodiervorrichtung eingeben zu müssen.

Diese Aufgabe wird durch die im Kennzeichenteil des Patentanspruches 1 angegebenen Merkmale gelöst.

Durch die unterschiedlichen Interpolationen für die bewegten Führungen kann man die tatsächlich durchlaufenen Bahnkurven besser den gewünschten Bahnkurven anpassen, ohne dass zu viele Werte diskreter Bahnpunkte eingegeben werden müßen.

Die Bahnkurve durchläuft eine Anzahl von durch Interpolation errechneten Zwischenpunkten, die ein Maß für die Genauigkeit sind, inwieweit die Ist-Bahnkurve von der Soll-Bahnkurve abweicht.

Ein Zusammenhang zwischen der oberen und der unteren Bahnkurve wird an den jeweiligen Schnittstellen des Elektrodendrahtes in dem zu bearbeitenden Werkstück durch die "Phasenbeziehung" des gleichzeitigen Drahtschnittpunktes hergestellt. Dies sei an einem Beispiel verdeutlicht, bei dem beide Führungen längs einer Kreisbahn bewegt werden, wobei beide Kreisbahnen der besseren Übersichtlichkeit halber genau senkrecht übereinander liegen und gleichen Durchmesser haben. Liegen dann zu einem Zeitpunkt die beiden Drahtschnittpunkte nicht senkrecht übereinander, sind sie also vielmehr gegeneinander versetzt, so kann man diesen Versatz durch einen Winkel oder eben eine Phasenbeziehung beschreiben.

Bei einer besonders vorteilhaften Ausführungsform der Erfindung beginnt und endet die Bewegung des Erodierdrahtes zwischen jeweils zwei korrespondierenden Punkten auf der Bahn der oberen und der unteren Fläche des Werkstückes jeweils gleichzeitig.

Eine vorteilhafte Ausführungsform weist einerseits eine zirkulare, andererseits eine elliptische Interpolation auf und eine andere Ausführungsform weist eine lineare und eine elliptische Interpolation auf.

Bei einem weiteren Ausführungsbeispiel erfolgt eine Interpolation linear, die andere zirkular.

Ein anderes Ausführungsbeispiel weist eine hyperbolische und eine lineare Interpolation der Bewegung auf.

Bei einem weiteren Ausführungsbeispiel der Erfindung wird eine Bewegung hyperbolisch, die andere zirkular interpoliert.

Ferner wird in einem weiteren Ausführungsbeispiel der Erfindung die Bewegung einerseits hyperbolisch, andererseits elliptisch interpoliert.

In einem weiteren Ausführungsbeispiel erfolgt eine Interpolation zirkular und die andere parabolisch und bei einem anderen Ausführungsbeispiel erfolgt die eine Interpolation elliptisch und die andere parabolisch.

In einem anderen Ausführungsbeispiel erfolgt eine Interpolation linear und die andere parabolisch und bei einem weiteren Ausführungsbeispiel erfolgt die eine Interpolation hyperbolisch und die andere parabolisch.

Bei einem weiteren Ausführungsbeispiele ist die eine Interpolation parabolisch und die andere Interpolation kubisch. Die kubische Interpolation dient insbesondere dazu, Kurven 3. Grades, sog. "Splines" zu ermöglichen.

In einem anderen Ausführungsbeispiel erfolgt die eine Interpolation zirkular und die andere kubisch und in einem weiteren Ausführungsbeispiel erfolgt die eine Interpolation elliptisch und die andere kubisch.

Bei einem weiteren Ausführungsbeispiel erfolgt die eine Interpolation linear und die andere kubisch und in einem anderen Ausführungsbeispiel erfolgt die eine Interpolation hyperbolisch und die andere kubisch.

Prinzipiell ist jede Kombination der Kurvenformen für die Interpolation möglich, sofern die Interpolationsfunktion der einen Führung von der der anderen Führung unterschiedlich ist. Wenn von linearer, zirkularer, elliptischer, parabolischer usw. Interpolation gesprochen wird, so bedeutet dies, daß die mathematische Funktion, nach der zwischen zwei benachbarten, vorgegebenen Bahnpunkten interpoliert wird, eben eine Gerade, ein Kreis, eine Ellipse, eine Parabel usw. ist, wobei bei den nichtlinearen Interpolationen natürlich weitere Parameter vorgegeben werden. So wird beispielsweise bei der zirkularen Interpolation (Interpolation längs einer Kreisbahn) der Kreismittelpunkt und der Kreisradius vorzugeben sein. Bei der Ellipse wird die Lage der beiden Brennpunkte vorzugeben sein usw.

Wenn eine oder beide Führungen nur zwei Bewegungskomponenten (z.B. x- und y-Achse) aufweisen, so erfolgt die Interpolation nur in einer Ebene (z.B. x, y-Ebene). In bestimmten Fällen sind eine oder beide Führungen aber auch drei-achsig bewegbar, also beispielsweise bei Werkstücken mit sich ändernder Dicke, bei denen während des Erodierens die "Rachenweite" verändert wird, in dem eine oder beide Führungen auch in Richtung der z-Achse bewegt werden. In diesen Fällen kann auch die Interpolation die z-Achse berücksichtigen, so daß die gewünschte Bahnkurve in den drei Raumachsen verändert wird. In diesen Fällen erfolgt dann auch die Interpolation längs einer im Raum liegenden Bahnkurve.

Selbstverständlich können alle anderen bekannten Interpolationen zur Erzeugung einer bestimmten Kurvenform angewandt werden.

Ausführungsbeispiele der Erfindung sind in den Zeichnungen dargestellt und werden im folgenden näher beschrieben.

Es zeigen:

Fig. 1    eine perspektivische Darstellung einer Erodiermaschine mit einer beweglichen Führung und einem beweglichen Werkzeug auf einem Kreuztisch;

Fig. 2    eine perspektivische Darstellung einer Erodiermaschine mit zwei beweglichen Drahtführungen;

Fig. 3    den Verlauf zweier Bahnkurven mit unterschiedlicher Interpolation (zirkular - linear);

Fig. 4    den Verlauf zweier Bahnkurven unterschiedlicher Interpolation, wobei die eine Bahnkurve zusätzlich Komponenten in Richtung der Z-Achse aufweist.

In den Zeichnungen ist zum Teil zur Verdeutlichung die Lage eines karthesischen Bezugs-Koordinaten-Systems (X, Y, Z) eingezeichnet, das die Lage der Hauptachsen der Erodiermaschine bezeichnet.

Da der konstruktive Aufbau einer Elektroerosionsmaschine allgemein bekannt ist, wird hierauf nicht näher eingegangen.

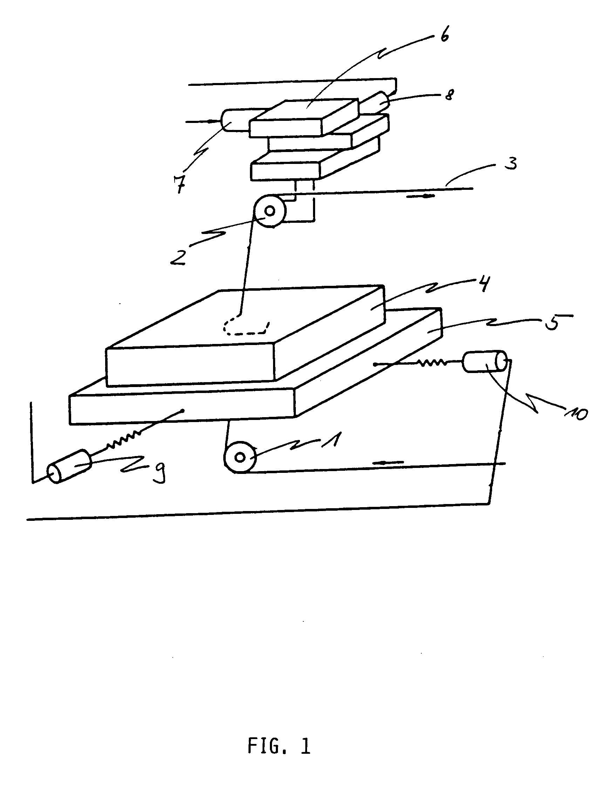

Fig. 1 zeigt eine Drahtelektrode 3, die von zwei Drahtführungen 1, 2 durch ein zu bearbeitendes Werkstück 4, welches auf einem Kreuztisch 5 angeordnet ist, geführt wird. Die Drahtführung 2 ist mit einem Bewegungsmechanismus 6 verbunden, der über zwei Motoren 7, 8 in U- bzw. V-Richtung beweglich ist. Des weiteren ist der Kreuztisch 5 über die beiden Motoren 9 und 10 in X- und Y-Richtung bewegbar. Diese Vorrichtung eignet sich insbesondere dann, wenn große Auslenkungen der Drahtelektrode 3 zwischen den beiden Drahtführungen 1, 2 erforderlich sind und gleichzeitig das auf dem Kreuztisch 5 angeordnete Werkstück 4 nicht überdurchschnittlich schwer ist.

Zum Schneiden gewünschter geometrischer Körper werden Koordinatenwerte von Bahnpunkten des Körpers in einen Speicher der numerischen Steuerung eingegeben, beispielsweise mittels Lochstreifenleser. Hierbei bezieht man diese Koordinatenwerte - je nach Leistungsfähigkeit der NC - entweder auf die Ebene der zu bewegenden Führung oder auf die Ebenen der Werkstückoberfläche. Auch ist es bei manchen geometrischen Körpern, wzb Kegelstumpf, Pyramidenstumpf usw möglich, nur die Koordinatenwerte für eine der Führungen einzugeben und aus diesen die Werte für die andere Führung zu errechnen, wzb im einfachsten Fall durch Multiplikation der eingegebenen Werte mit einem Streckenverhältnis. Naturgemäß will man möglichst wenig "externe" Werte eingeben. Deshalb verwendet man Interpolatoren, die zwischen den vorgegebenen Punkten und einer dazwischen anzunähernden gewünschten Bahnform den bestmöglichst angenäherten Kurvenverlauf errechnen. Zwischen den vorgegebenen Punkten verläuft damit die weitere Bahnbewegung der Drahtelektrode 3 vollkommen selbständig nach einer vorbestimmten Bahnkurve.

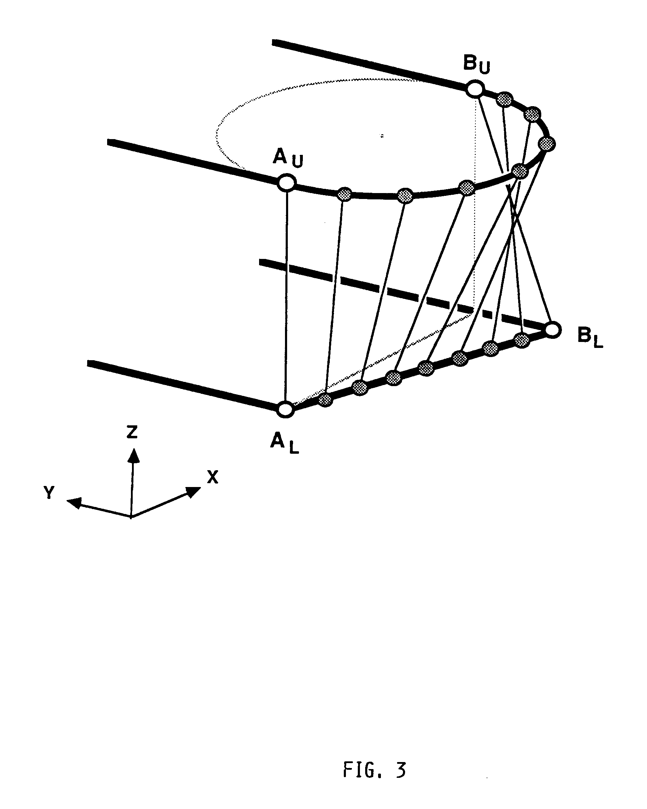

Dabei erfolgt die Interpolation der Bahnkurven, die durch die beweglichen Teile 2, 5 bestimmt wird, voneinander getrennt. Es kann beispielsweise die über die Motoren 9 und 10 gesteuerte Bewegung des Kreuztisches 5 zu einer linear interpolierten Bahnkurve führen, wohingegen die Motoren 7, 8 eine Bewegung der Drahtführung 2 bewirken, die eine zirkular interpolierte Bahnkurve erzeugt. Ein derartiger Bahnverlauf ist in Fig. 3 näher dargestellt.

Mit Hilfe eines zwischengeschalteten CNC-Rechners wird der Abgleich zwischen den jeweiligen Bahnkurven ermöglicht.

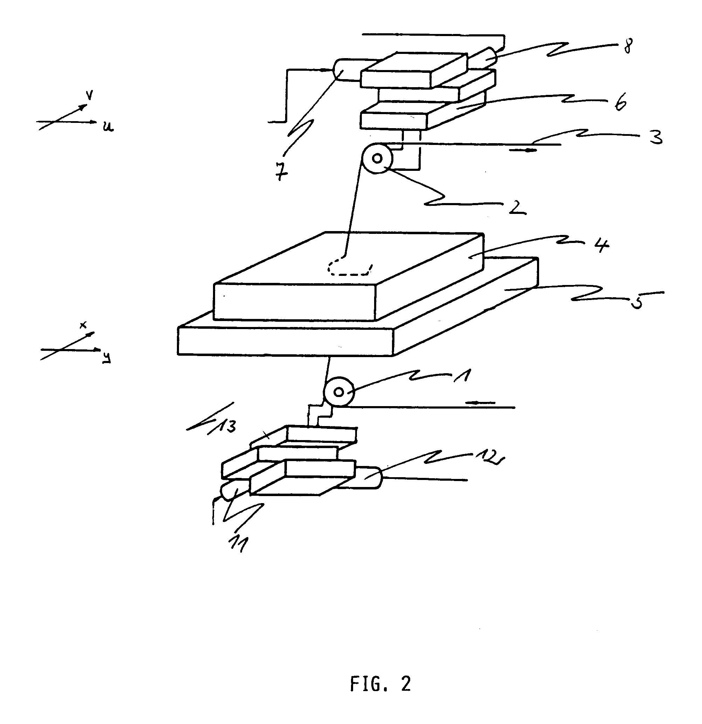

Fig. 2 zeigt im Prinzip eine Erodiermaschine wie in Fig. 1, wobei jedoch die Bewegung der unteren Führung nicht mehr durch die Änderung der Position des Kreuztisches 5, sondern durch die Änderung der Position der unteren Drahtführung 1 erfolgt, wofür die Motoren 11 und 12 in Zusammenhang mit einem Bewegungsmechanismus 13 vorgesehen sind.

Im Unterschied zum Ausführungsbeispiel gemäß Fig. 1 findet das Ausführungsbeispiel gemäß Fig. 2 dann Anwendung, wenn es sich um sehr schwere Werkstücke 4 handelt, bei denen die Fortbewegung komplizierter und aufwendiger ist, als die Bewegung der dazu verhältnismäßig kleinen und leichten Drahtführung 1.

Fig. 3 zeigt die Bahnkurven der Drahtelektrode 3 zwischen den Bahnpunkten $A_U$, $B_U$ und den Punkten $A_L$ und $B_L$. Die in der Zeichnung grau schraffierten Einzelpunkte stellen dabei die eingegebenen, charakteristischen Punkte dar; zwischen diesen erfolgt die Interpolation linear. Der Zeichnung ist dabei entnehmbar, daß die Interpolation zwischen den Punkten der unteren Bahnkurve von $A_L$ bis $B_L$ linear erfolgt, wohingegen die Interpolation zwischen den Punkten der oberen Bahnkurve von $A_U$ bis $B_U$ zirkular vonstatten geht. Dabei sind im Falle der zirkularen Interpolation nur Anfangs- und Endpunkt sowie der Radius des Kreises, längs dessen Umfang interpoliert werden soll, von außen einzugeben, d.h., das Bedienungspersonal hat im Verhältnis zu der erreichbaren Bearbeitungsgenauigkeit ein Minimum an Werten einzugeben. Die schraffiert in Fig. 3 dargestellten Bahnpunkte sind hier also von den Interpolatoren errechnete Zwischenpunkte, so daß in diesem Falle nur noch die Werte der Punkte $A_U$, $B_U$, $A_L$ und $B_L$ eingegeben werden müssen. An diesem Beispiel ist ersichtlich, daß auch sehr komplizierte geometrische Figuren durch extrem wenige extern eingegebene Werte definiert werden können und daß man dabei trotzdem diese geometrischen Figuren mit äußerster Präzision erhalten kann. Im Extremfall kann man die "Schrittweite" für die Interplation nahezu beliebig klein wählen, wobei als sinnvolle Untergrenze die Schrittweite der noch steuerbaren Bewegungen gewählt wird, die durch die Schrittweite der verwendeten Schrittmotoren (unter Berücksichtigung eventueller Getriebeuntersetzungen) vorgegeben ist.

Wie schon zuvor erläutert, wird durch einen zwischengeschalteten CNC-Rechner die obere und untere Bewegung der Drahtelektrode 3, beginnend bei den Punkten $A_U$, $A_L$ und endend bei den Punkten $B_U$, $B_L$ zueinander phasenbezogen derart durchgeführt, daß die Drahtelektrode 3 zu einem Zeitpunkt gleichzeitig $A_U$ und $A_L$ durchläuft und zu einem anderen Zeitpunkt gleichzeitig $B_U$ und $B_L$ durchläuft.

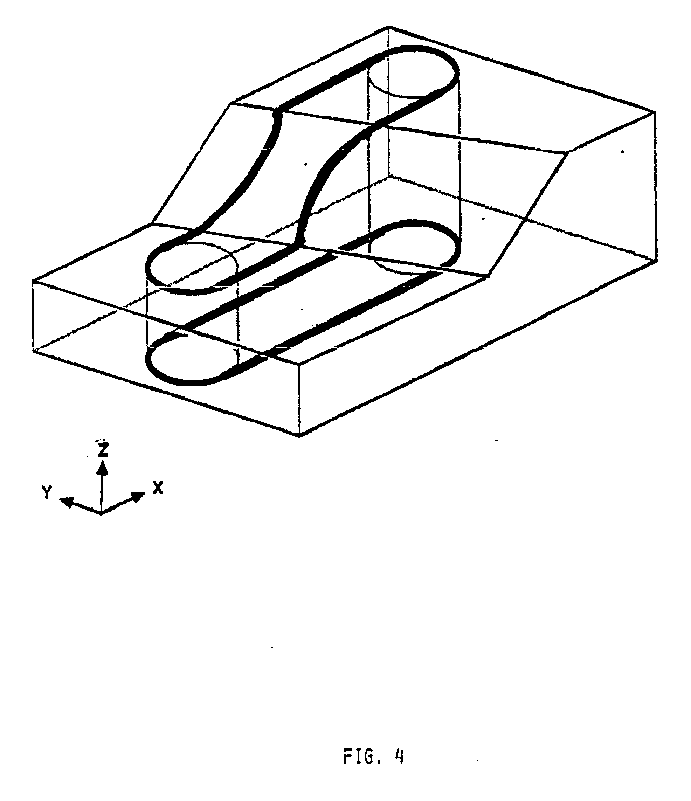

Die Fig. 4 schließlich zeigt die gleiche Bewegungsmöglichkeit der Drahtelektrode 3, wobei jedoch die Bewegung einer Bahnkurve auch in Z-Richtung interpoliert werden kann, um der Höhe eines zu bearbeitenden Werkstükkes 4 gerecht werden zu können.

Bezugzeichenliste

| | |
|---|---|
| 1 | Drahtführung |
| 2 | Drahtführung |
| 3 | Drahtelektrode |
| 4 | Werkstück |
| 5 | Kreuztisch |
| 6 | Bewegungsmechanismus |
| 7 | Motor |
| 8 | Motor |
| 9 | Motor |
| 10 | Motor |
| 11 | Motor |
| 12 | Motor |
| 13 | Bewegungsmechanismus |

**Patentansprüche**

1. Verfahren zur numerischen Bahnsteuerung für Elektroerodiermaschinen, die mit einer zwischen zwei Führungen (1, 2) gespannten Drahtelektrode (3) versehen sind und bei denen ein Werkstück (4) an einer weiteren Führung (5) gehalten ist, wobei zwei der Führungen (1, 2, 5) unabhängig voneinander bewegt werden und wobei die Bewegungsbahn der bewegten Führungen (1, 2, 5) durch Interpolation aus vorgegebenen Bahnpunkten bestimmt wird, dadurch **gekennzeichnet,** daß die Interpolationen der Bewegungsbahnen der beiden bewegten Führungen (1, 2, 5) voneinander verschieden sind.

2. Verfahren nach Anspruch 1, dadurch gekennzeichnet, daß die Bewegungen der beiden Führungen (1, 2, 5) gleichzeitig beginnen und gleichzeitig enden.

3. Verfahren nach einem der Ansprüche 1 - 2, dadurch gekennzeichnet, daß die eine Interpolation zirkular und die andere elliptisch ist.

4. Verfahren nach einem der Ansprüche 1 - 2, dadurch gekennzeichnet, daß die eine Interpolation linear und die andere elliptisch ist.

5. Verfahren nach einem der Ansprüche 1 - 2, dadurch gekennzeichnet, daß die eine Interpolation linear und die andere zirkular ist.

6. Verfahren nach einem der Ansprüche 1 - 2, dadurch gekennzeichnet, daß die eine Interpolation hyperbolisch und die andere linear ist.

7. Verfahren nach einem der Ansprüche 1-2, dadurch gekennzeichnet, daß die eine Interpolation hyperbolisch und die andere zirkular ist.

8. Verfahren nach einem der Ansprüche 1 - 2, dadurch gekennzeichnet, daß die eine Interpolation hyperbolisch und die andere elliptisch ist.

9. Verfahren nach einem der Ansprüche 1 - 2, dadurch gekennzeichnet, daß die eine Interpolation zirkular und die andere parabolisch ist.

10. Verfahren nach einem der Ansprüche 1 - 2 , dadurch gekennzeichnet, daß die eine Interpolation elliptisch und die andere parabolisch ist.

11. Verfahren nach einem der Ansprüche 1 - 2 , dadurch gekennzeichnet, daß die eine Interpolation linear und die andere parabolisch ist.

12. Verfahren nach einem der Ansprüche 1 - 2, dadurch gekennzeichnet, daß die eine Interpolation hyperbolisch und die andere parabolisch ist.

13. Verfahren nach einem der Ansprüche 1 - 2, dadurch gekennzeichnet, daß die eine Interpolation parabolisch und die andere kubisch ist.

14. Verfahren nach einem der Ansprüche 1 - 2, dadurch gekennzeichnet, daß die eine Interpolation zirkular und die andere kubisch ist.

15. Verfahren nach einem der Ansprüche 1 - 2, dadurch gekennzeichnet, daß die eine Interpolation elliptisch und die andere kubisch ist.

16. Verfahren nach einem der Ansprüche 1 - 2, dadurch gekennzeichnet, daß die eine Interpolation linear und die andere kubisch ist.

17. Verfahren nach einem der Ansprüche 1 - 2, dadurch gekennzeichnet, daß die eine Interpolation hyperbolisch und die andere kubisch ist.

## Claims

1. A method of numerical path control for electroerosion machines which are provided with a wire electrode (3) clamped between two guides (1, 2) and in which a workpiece (4) is supported on a further guide (5), wherein two of the guides (1, 2, 5) are moved independently of one another and wherein the path of movement of the moving guides (1, 2, 5) is determined by interpolation from predetermined path points, characterised in that the interpolations of the paths of movement of the two moving guides (1, 2, 5) differ from one another.

2. A method as claimed in Claim 1, characterised in that the movements of the two guides (1, 2, 5) commence simultaneously and end simultaneously.

3. A method as claimed in one of Claims 1 - 2, characterised in that one interpolation is circular and the other is elliptical.

4. A method as claimed in one of Claims 1 - 2, characterised in that one interpolation is linear and the other is elliptical.

5. A method as claimed in one of Claims 1 - 2, characterised in that one interpolation is linear and the other is circular.

6. A method as claimed in one of Claims 1 - 2, characterised in that one interpolation is hyperbolic and the other is linear.

7. A method as claimed in one of Claims 1 - 2, characterised in that one interpolation is hyperbolic and the other is circular.

8. A method as claimed in one of Claims 1 - 2, characterised in that one interpolation is hyperbolic and the other is elliptical.

9. A method as claimed in one of Claims 1 -2, characterised in that one interpolation is circular and the other is parabolic.

10. A method as claimed in one of Claims 1 - 2, characterised in that one interpolation is elliptical and the other is parabolic.

11. A method as claimed in one of Claims 1 - 2, characterised in that one interpolation is linear and the other is parabolic.

12. A method as claimed in one of Claims 1 - 2, characterised in that one interpolation is hyperbolic and the other is parabolic.

13. A method as claimed in one of Claims 1 - 2, characterised in that one interpolation is parabolic and the other is cubic.

14. A method as claimed in one of Claims 1 - 2, characterised in that one interpolation is circular and the other is cubic.

15. A method as claimed in one of Claims 1 - 2, characterised in that one interpolation is elliptical and the other is cubic.

**16.** A method as claimed in one of Claims 1 - 2, characterised in that one interpolation is linear and the other is cubic.

**17.** A method as claimed in one of Claims 1 - 2, characterised in that one interpolation is hyperbolic and the other is cubic.

**Revendications**

**1.** Procédé de commande numérique de la trajectoire de machines d'électroérosion qui sont munies d'un fil-électrode (3) tendu entre deux guides (1, 2) et dans lesquelles une pièce à usiner (4) est maintenue par un autre guide (5), deux des guides (1, 2, 5) se déplaçant indépendamment l'un de l'autre, la trajectoire des guides mobiles (1, 2, 5) se déplaçant indépendamment l'un de l'autre, la trajectoire des guides mobiles (1, 2, 5) étant déterminée par interpolation de points de la trajectoire prédéterminés,
caractérisé en ce que les interpolations des trajectoires des deux guides mobiles (1, 2, 5) sont différentes.

**2.** Procédé selon la revendication 1, caractérisé en ce que les déplacements des deux guides mobiles (1, 2, 5) débutent et se terminent simultanément.

**3.** Procédé selon la revendication 1 ou 2, caractérisé en ce qu'une interpolation est circulaire et l'autre elliptique.

**4.** Procédé selon la revendication 1 ou 2, caractérisé en ce qu'une des interpolations est linéaire et l'autre elliptique.

**5.** Procédé selon la revendication 1 ou 2, caractérisé en ce qu'une interpolation est linéaire et l'autre circulaire

**6.** Procédé selon la revendication 1 ou 2, caractérisé en ce qu'une interpolation est hyperbolique et l'autre linéaire.

**7.** Procédé selon la revendication 1 ou 2, caractérisé en ce qu'une interpolation est hyperbolique et l'autre circulaire.

**8.** Procédé selon la revendication 1 ou 2, caractérisé en ce qu'une interpolation est hyperbolique et l'autre elliptique.

**9.** Procédé selon la revendication 1 ou 2, caractérisé en ce qu'une interpolation est circulaire et l'autre parabolique.

**10.** Procédé selon la revendication 1 ou 2, caractérisé en ce qu'une interpolation est elliptique et l'autre parabolique.

**11.** Procédé selon la revendication 1 ou 2, caractérisé en ce qu'une interpolation est linéaire et l'autre parabolique.

**12.** Procédé selon la revendication 1 ou 2, caractérisé en ce qu'une interpolation est hyperbolique et l'autre parabolique

**13.** Procédé selon la revendication 1 ou 2, caractérisé en ce qu'une interpolation est parabolique et l'autre cubique.

**14.** Procédé selon la revendication 1 ou 2, caractérisé en ce qu'une interpolation est circulaire et l'autre cubique.

**15.** Procédé selon la revendication 1 ou 2, caractérisé en ce qu'une interpolation est elliptique et l'autre cubique.

**16.** Procédé selon la revendication 1 ou 2, caractérisé en ce qu'une interpolation est linéaire et l'autre cubique.

**17.** Procédé selon la revendication 1 ou 2, caractérisé en ce qu'une interpolation est hyperbolique et l'autre cubique

FIG. 1

FIG. 2

FIG. 3

FIG. 4